# EUROPÄISCHE PATENTSCHRIFT

(11) **EP 0 776 749 B1**
(45) Veröffentlichungstag und Bekanntmachung des Hinweises auf die Patenterteilung: **27.11.2002**
(21) Anmeldenummer: 96115781.5
(22) Anmeldetag: 02.10.1996
(51) Int. Cl.: A47K 3/02, B29C 33/00, B29C 70/68, B32B 1/10

(54) **Verfahren zur Herstellung von Verbund-Wannen**
Process for manufacturing multilayered tubs
Procédé de fabrication de baignoires stratifiées

(30) Priorität: 29.11.1995 DE 19544426
(43) Veröffentlichungstag der Anmeldung: 04.06.1997
(73) Patentinhaber: Franz Kaldewei GmbH & Co.KG, 59229 Ahlen (DE)
(72) Erfinder: Pieper, Fritz, 27755 Delmenhorst (DE)
(74) Vertreter: Albrecht, Rainer Harald, Dr.-Ing.

(56) Entgegenhaltungen:
- EP-A- 0 289 764
- EP-A- 0 321 264
- CH-A- 563 763
- DE-A- 2 104 741
- FR-A- 2 087 513
- FR-A- 2 307 637
- US-A- 1 953 452
- US-A- 3 426 110
- US-A- 4 289 717
- US-A- 4 938 825
- US-A- 5 087 514

## Beschreibung

Die Erfindung betrifft ein Verfahren zur Herstellung einer Verbund-Wanne, die aus einer Kunststoffinnenschale, einer Außenschale und einer Zwischenschicht aus einem Füllstoff besteht, wobei
- die vorgeformte Außenschale über die geformte Kunststoffinnenschale gestülpt wird,
- als Füllstoff ein Zweikomponenten-Flüssigkunststoff verwendet wird, dessen Komponenten gemischt und danach unter Druck durch eine Ablauföffnung oder eine Überlauföffnung in der Außenschale in den Zwischenraum zwischen den Schalen injiziert werden, und
- der Zwischenraum durch eine in die Außenschale eingebrachte Entlüftungsöffnung, welche weit von der Injektionsstelle an einem gegenüber dieser höherliegenden Punkt angeordnet ist, entlüftet wird.

Ein solches Verfahren ist aus US-A 4 289 717 bekannt. Die Außenschale besteht aus einem im Gießverfahren hergestellten Formteil aus Polyesterharz, in das aus Stabilitätsgründen Verstärkungsrippen eingeformt sind. Die Kunststoffinnenschale hat einen zweischichtigen Aufbau und weist eine Deckschicht aus Vinylkunststoff sowie eine Polyurethanschicht auf. Sie wird in einem mehrstufigen Spritzverfahren hergestellt. Anschließend wird die Außenschale über die Kunststoffinnenschale gestülpt, wobei die an die Außenschale angeformten Verstärkungsrippen einen breiten Spaltraum zwischen den Schalen definieren. Dieser wird anschließend unter Verwendung eines Treibmittel enthaltenden Zweikomponenten-Flüssigkunststoffes ausgeschäumt. Das Verfahren ist aufwendig und erfordert lange Aushärtezeiten. Für eine Serienfertigung von Verbund-Wannen erscheint das Verfahren wenig geeignet.

Bei einem aus DE-A 2 618 070 bekannten Verfahrens zur Herstellung einer Verbund-Wanne wird der Zwischenraum zwischen Innenschale und Außenschale ebenfalls mit einem Kunststoffschaum ausgeschäumt. Über die genauen Verfahrensbedingungen beim Ausschäumen des Zwischenraumes werden keine näheren Angaben gemacht. Es ist davon auszugehen, dass die Füllung des Zwischenraumes mit einem Kunststoffschaum als Füllstoff unter herkömmlichen Bedingungen einen relativ langen Zeitraum in Anspruch nimmt und in dem Zwischenraum zwischen beiden Schalen Hohlräume entstehen, in die aufgrund ungleichmäßiger Verteilung kein oder kein ausreichender Füllstoff gelangt. Dies gefährdet die Stabilität der herzustellenden Verbund-Wanne.

Aus der älteren Patentanmeldung DE-A-44 31 716 ist ebenfalls ein Verfahren zur Herstellung einer Verbund-Wanne bekannt. Hier wird als Füllstoff beispielsweise Polyurethan als Gießharz in eine Ablauföffnung der Außenschale injiziert, wobei zur besseren Verteilung der injizierten Masse in dem Zwischenraum ein Vakuum erzeugt wird. Die Schrift macht keine Angaben über den Druck, mit dem der Füllstoff injiziert wird; es handelt sich jedoch um ein Niederdruckverfahren. Dabei hat sich gezeigt, dass die Zykluszeiten für den Verfahrens schritt des Einbringens des Füllstoffes in den Zwischenraum zu lang sind, so dass das Verfahren für eine Serienfertigung von Verbund-Wannen in größeren Stückzahlen relativ unwirtschaftlich ist.

Aus EP-A 0 289 764 ist ein Verfahren zum Ausschäumen von Hohlräumen bekannt. In US-A 1 953 452 ist eine Vorrichtung zum Verfüllen von Spalträumen beschrieben. Beide Schriften betreffen jedoch nicht die Herstellung von Verbund-Wannen.

Der Erfindung liegt die Aufgabe zugrunde, ein Verfahren zur Herstellung von Verbund-Wannen zur Verfügung zu stellen, das die Herstellung stabiler Wannen mit gleichmäßig verfülltem Zwischenraum ermöglicht, wobei eine relativ kurze Zykluszeit eingehalten werden kann.

Ausgehend von dem eingangs beschriebenen Verfahren wird die Aufgabe erfindungsgemäß dadurch gelöst, dass als Außenschale eine Stahlwanne, als Kunststoffinnenschale ein tiefgezogener Acrylrohling und als Füllstoff ein kompaktes Polyurethan im Wesentlichen ohne Gaseinschlüsse oder ein Polymethylmethacrylat verwendet werden und dass die Komponenten des Füllstoffes in einem druckfest an die Öffnung der Außenschale angeschlossenen Injektionskopf einer Zweikomponenten-Flüssigkunststoff-Hochdruckmaschine bei einem Druck zwischen 60 bar und 200 bar gemischt werden. Erfindungsgemäß wird als Füllstoff ein Zweikomponenten-Flüssigkunststoff verwendet, dessen Komponenten unter hohem Druck von 60 bar bis 200 bar vermischt werden und der dann in die Ablauföffnung oder die Überlauföffnung der Außen schale eingespritzt wird. Der Injektionskopf einer Zweikomponenten-Flüssigkunststoff-Hochdruckmaschine ist druckfest an der Ablauf- bzw. Überlauföffnung montiert. Der Füllstoff ist also kein Schaumstoff, sondern ein Zweikomponenten-Flüssigkunststoff, dessen beide Komponenten erst kurz vor dem injizieren zusammengeführt werden und dann unter Wärmeentwicklung in dem Zwischenraum zwischen den beiden Wannenschalen miteinander regieren und abbinden.

Gemäß einer bevorzugten Weiterbildung des erfindungsgemäßen Verfahren verwendet man für die Vermischung der beiden Komponenten des Zweikompontenen-Flüssigkunststoffes keine gesonderte Mischvorrichtung, sondern lässt diese im Mischkopf der Injektionsmaschine im Gegenstrom strömen und zwar unter hohem Druck, wodurch die Vermischung erfolgt. Es hat sich gezeigt, dass es mittels des Verfahrens möglich ist, den Zwischenraum zwischen den beiden Schalen einer Verbund-Wanne je nach Größe der Wanne innerhalb von 10 bis 30 Sekunden zu füllen, was gegenüber bekannten Verfahren eine enorme Verbesserung und Verkürzung der Zykluszeit darstellt. Vorzugsweise erfolgt das homogene Vermischen der Komponenten des Füllstoffes bei einem Druck zwischen 90 bar und 150 bar, weiter vorzugsweise etwa im Bereich von 120 bar. Beim Zusammentreffen beider Komponenten wird das Gemisch vorzugsweise um 90° umgelenkt und in die Form injiziert. Im Moment der Injektion ist der Druck geringer. In der Form baut sich dann Forminnendruck auf, der im Bereich von einigen bar liegt, z. B. etwa 1,5 bar bis 2 bar.

In die äußere der beiden Wannenschalen wird eine Entlüftungsöffnung eingebracht, um den Zwischenraum zwischen den Wannenschalen zu entlüften. Die Entlüftungsöffnung ist relativ weit von der Injektionsstelle und an einem gegen dieser höherliegenden Punkt angeordnet. Mit Hilfe der Entlüftungsöffnung (sogenannter "Steiger") kann man den für die Füllstoffmenge notwendigen Materialeinsatz steuern, indem man, nach einem bestimmten, empirisch ermittelten Zeitraum nach dem Zeitpunkt, in dem der Füllstoff an der Entlüftungsöffnung austritt, die Materialzufuhr abstellt. Die Materialzufuhr wird also nach dem Austreten des Füllstoffes noch für eine gewisse kurze Zeitdauer fortgesetzt, um eventuell noch vorhandene Lunkerstellen zu beseitigen. Es hat sich gezeigt, dass durch dieses Verfahren eine sehr vollständige und gleichmäßige Füllung des Zwischenraums möglich ist.

Gemäß einer bevorzugten Weiterentwicklung des erfindungsgemäßen Verfahrens kann man den Füllstoff auf einen im Bereich der Ablauföffnung oder Überlauföffnung der Wanne eingeformten Kegelspitzen, so dass dieser dort umgelenkt wird und von dem Kegel aus ringförmig in den Zwischenraum zwischen den Schalen fließt. Dies dient dazu, eine gleichmäßigere Verteilung in alle Richtungen zu erzielen. Die Spitze des Kegels liegt dann mitten im Materialstrom. Gemäß einer bevorzugten Weiterbildung kann man auch vor dem Überstülpen der Außenschale über die Innenschale in den Zwischenraum an bestimmten Stellen Hindernisse einbringen, die die Möglichkeit bieten, den Materialstrom in dem Zwischenraum zu lenken, so dass der Füllstoff beispielsweise zunächst in eine Richtung fließt, bis ein dort liegender Bereich des Zwischenraumes mit Füllstoff gefüllt ist und danach das weiter unter Druck nachfließende Material in eine andere Richtung fließt und den restlichen Zwischenraum ausfüllt.

Als Füllstoff wird ein kompaktes Polyurethan im Wesentlichen ohne Gaseinschlüsse (also kein Kunststoffschaum) oder ein Polymethylmethacrylat verwendet. Nach der vollständigen Füllung des Zwischenraums zwischen den Wannenschalen wartet man noch einen relativ kurzen Zeitraum ab, der für die Vernetzung des eingespritzten Füllstoffes dient. Danach wird die Wanne entformt.

Weitere bevorzugte Ausgestaltungen des erfindungsgemäßen Verfahrens sind Gegenstand der nachgeordneten Patentansprüche 8 bis 10.

Im folgenden wird die vorliegende Erfindung anhand eines Ausführungsbeispiels unter Bezugnahme auf die beiliegenden Zeichnungen näher beschrieben. Dabei zeigen
- Fig. 1: einen Längsschnitt durch eine erfindungsgemäße Verbundbadewanne und das zugehörige Werkzeug bei der Herstellung;
- Fig. 2: einen vergrößerten Ausschnitt II von Fig. 1;
- Fig. 3: im Schnitt einen Adapter für das Injizieren des Füllstoffs über das Ablaufloch;
- Fig. 4: im Schnitt einen Adapter für das Injizieren des Füllstoffs über das Überlaufloch;
- Fig. 5: eine Vorderansicht des Adapters gemäß Fig. 4.

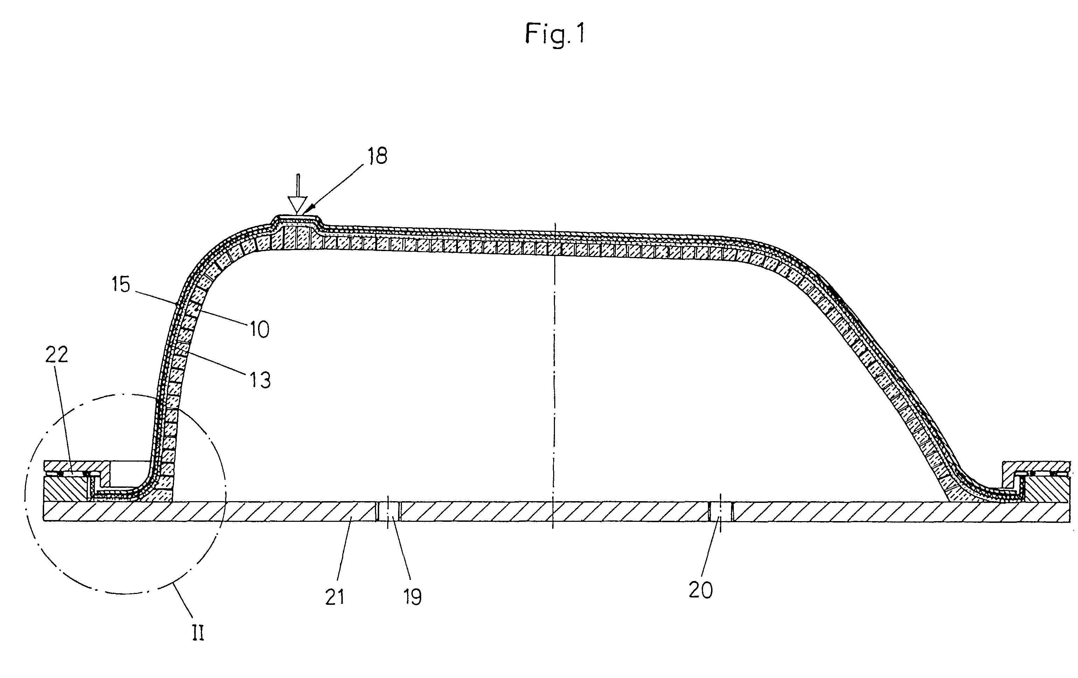

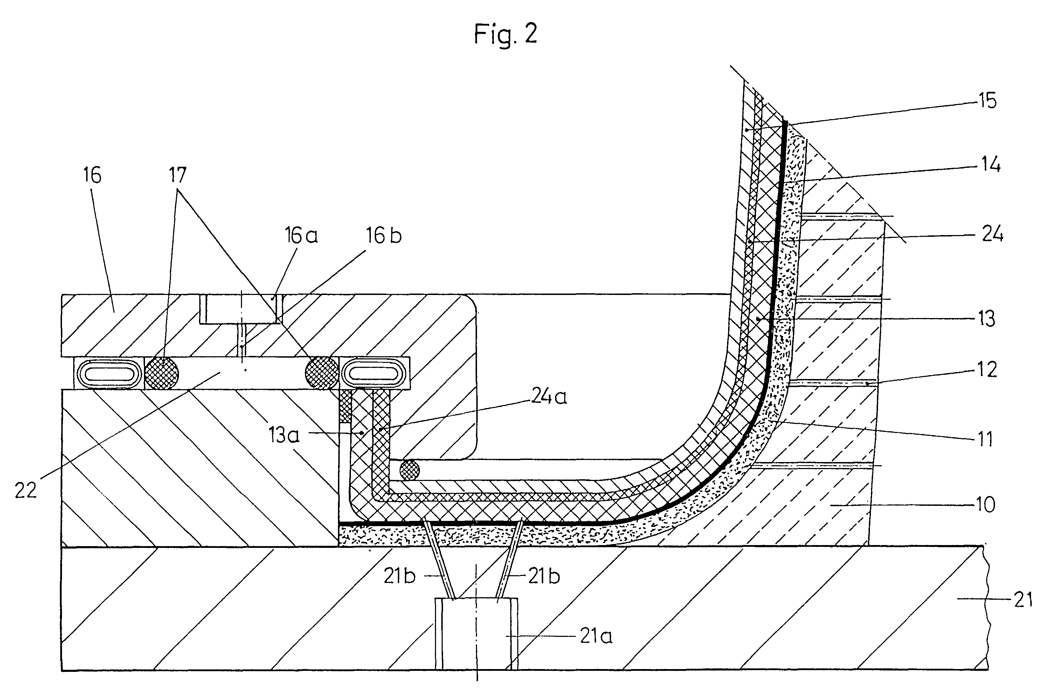

Zunächst wird auf die Fig. 1 und 2 Bezug genommen. Die Form für die Herstellung der erfindungsgemäßen Verbund-Wanne umfaßt einen Aluminiumkern 10, der allseitig etwas kleiner ist als der Innenkörper des Acrylrohlings. Auf diesen Aluminiumkern 10 wird flächig in kleinen Stücken oder Streifen ein einige Millimeter starker relativ harter zu 50% offenzelliger Kunststoffschaum 11, vorzugsweise Polyurethanschaum, aufgeklebt. Der Kern 10 wurde vorher mit Vakuumbohrungen 12 in einem bestimmten vorgesehenen Rasterabstand versehen, der Rasterabstand kann z.B. zwei Zentimeter betragen, der Durchmesser dieser Vakuumbohrungen 12 kann beispielsweise 1,5 mm betragen. Der Aluminiumkern 10 ruht auf einer Grundplatte 21, in der sich ein Vakuumkanal 19 für den Vakuumanschluß und ein Druckluftkanal 20 für den Druckluftanschluß befinden.

In dem erfindungsgemäßen Verfahren wird nun auf die Innenseite des Acrylrohlings 13 eine gummiartige, im Wandund Radienbereich hochelastische und im Bodenbereich relativ harte aber flexible Polyurethanschicht 14 aufgebracht, und zwar durch Aufspritzen, wobei diese Polyurethanschicht 14 relativ dünn ist und beispielsweise eine Stärke von 1 mm bis 1,5 mm aufweist. Diese Schicht 14 aus einer gummiartigen Folie wird zwar nicht ganzflächig aber in größeren Punkten sauber auf die Schaumschicht 11 geklebt, die sich auf dem Aluminiumkern 10 befindet. Die Polyurethanschaumschicht 11 und die gummiartige Folienschicht 14 ermöglichen es mit dem gleichen Kern 10 Verbund-Wannen herzustellen, deren Rohlinge aufgrund der Fertigung maßliche Toleranzen aufweisen.

Kern 10 und Grundplatte 21 können über den Vakuumkanal 19 einem Unterdruck und über den Druckluftkanal 20 alternativ auch einem durch Druckluft erzeugten Überdruck ausgesetzt werden. Der maßliche Toleranzausgleich wird nachfolgend anhand der Beschreibung des Verfahrens noch näher erläutert.

Wie man aus den Fig. 1 und 2 weiter ersieht, umfaßt die Vorrichtung einen Dichtrahmen 16, der im Querschnitt winklig ist und etwa die Form eines liegenden L hat. Zur Abdichtung sind unter dem Dichtrahmen 16 die Dichtschnüre 17 vorgesehen. Der Acrylrohling 13 weist weiter einen rechtwinklig abgewinkelten umlaufenden äußeren Rand 13a auf. Das Einbringen des Füllstoffs für den Verbund zwischen der Stahlwanne 15 und dem Acrylrohling 13 erfolgt beispielsweise über das Ablaufloch 18, das sich in der Darstellung gemäß Fig. 1 oben befindet, da die Wanne bei ihrer Herstellung ja umgestülpt auf den Aluminiumkern 10 aufgelegt wird.

Die Vorgehensweise bei der Herstellung der erfindungsgemäßen Verbundbadewanne ist wie folgt. Zunächst wird zwischen dem Aluminiumkern 10 und der gummiartigen Folienschicht 14 ein Vakuum aufgebaut, indem über die Vakuumbohrungen 12 ein Unterdruck erzeugt wird. Dadurch wird die Polyurethanschaumschicht 11 allseitig etwas zusammengezogen. Beispielsweise kann die Dicke dieser Schicht aus Polyurethanschaum zunächst vor Anlegen des Vakuums 6 mm betragen und nach Anlegen des Vakuums um beispielsweise etwa 2 mm zusammengezogen werden. Dieser mit der Schaumschicht versehene Kern ist dann ringsum etwas kleiner als der Acrylrohling, beispielsweise um etwa 1 mm. Der Acrylrohling wird dann auf den Kern aufgelegt. Durch das in der Grundplatte 21 aufgebaute Vakuum wird der Acrylrohling exakter positioniert. Für die Grundplatte 21 einerseits und den Kern 10 andererseits sind jeweils voneinander unabhängige Vakuumsysteme vorgesehen. Das Vakuum im Bereich der Grundplatte beläßt man bis zur Entformung der Wanne.

Das Vakuumsystem für den Kern 10 wird gebildet durch den Vakuumkanal 19, den Druckluftkanal 20 und die Vakuumbohrungen 12. Das vorzugsweise davon unabhängige Vakuum-/Druckluftsystem für die Grundplatte 21 umfaßt einen weiteren größeren Kanal 21a für einen Vakuum- bzw. Druckluftanschluß von dem aus sich kleinere Kanäle 21b bis zur Innenseite des Acrylrohlings 13 hin erstrecken, so daß bei Anlegen eines Vakuums dort der Acrylrohling 13 ebenfalls angezogen wird zur Grundplatte 21 hin und dadurch genau positioniert wird.

Vorzugsweise davon wiederum unabhängig ist das Vakuumsystem für den Dichtrahmen 16. Mittels des größeren Kanals 16a und des in diesen mündenden kleineren Vakuumkanals 16b kann an die umlaufende Dichtkammer 22 ein Vakuum angelegt werden. Dadurch wird der Dichtrahmen 16 an den Wannenrohling gepreßt und spannt diesen ein.

Wie man aus Fig. 2 erkennt, wird der Füllstoff 24 so eingespritzt, daß er bis in den Zwischenraum zwischen dem Kragen 13a des Acrylrohlings und dem vertikalen Schenkel des Dichtrahmens 16 gelangt. Das Material des Füllstoffs 24 bildet also auch einen Kragen 24a aus, anders als der Stahlrohling 15, der keinen solchen Kragen hat. Um sicher zu stellen, daß der Zwischenraum zwischen Acrylrohling 13 und Stahlwanne 15 beim Einspritzen des Füllstoffs 24 entlüftet wird, bringt man vorzugsweise einen sogenannten "Steiger" ein, d.h. eine Bohrung in der Stahlwanne 15 (nicht dargestellt), die dann durch den eingespritzten Füllstoff 24 verschlossen wird. Diese Bohrung (Steiger) kann, um den Formeninnendruck so gering wie möglich zu halten, den gleichen Durchmesser haben wie die Einspritzöffnung des Injektionskopfs.

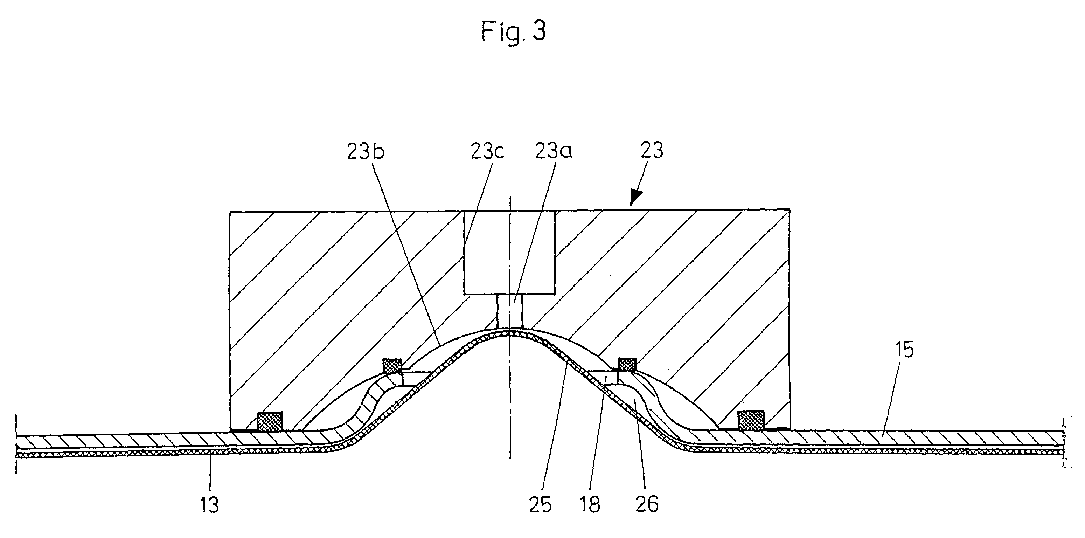

Dann wird zunächst das zwischen dem Kern 10 und der gummiartigen Folienschicht 14 aufgebaute Vakuum entspannt. Dadurch dehnt sich die Schicht 11 aus Polyurethanschaum aus und positioniert den Acrylrohling 13. Danach wird der Stahlrohling ( Stahlwanne 15 ) über den Acrylrohling 13 gestülpt und der Adapter 23, der in Fig. 3 im einzelnen dargestellt ist und der Injektionskopf ( nicht dargestellt ) der Zweikomponenten-Flüssigkunststoff-Hochdruckmaschine werden an die Ablauföffnung 18 angeschlossen. Es folgt dann das Injizieren des Füllstoffs in den Zwischenraum zwischen Stahlwanne 15 und Acrylrohling 13, so daß sich dort die Zwischenschicht 24 ( Verbundschicht ) bildet und nach dem Aushärten der Verbund der Wannenschalen entsteht. Nach der vorgesehenen Verweilzeit im Werkzeug wird der Dichtrahmen 16 entfernt. Das Vakuumsystem für die Grundplatte 21 wird dabei entspannt und gleichzeitig mit Druckluft beaufschlagt, um das Entformen zu erleichtern.

Fertigungstechnisch bedingte Maßtoleranzen werden nun mit Hilfe des erfindungsgemäßen Verfahrens wie folgt ausgeglichen. Plustoleranzen, d. h. das Material des Acrylrohlings ist dicker und es bestehen maßliche Plusveränderungen nach innen oder außen. In diesem Fall wird die Schicht 11 aus dem Polyurethanschaum an der entsprechenden Stelle nach innen gedrückt oder aber der Schaum drückt den Acrylrohling 13 an den entsprechenden Stellen in Richtung auf die Stahlwanne 15.

Bei Plustoleranzen nach außen erfolgt der Ausgleich durch den durch das Injizieren aufgebauten Innendruck.

Bei Minustoleranzen, d. h. wenn das Material des Acrylrohlings 13 dünner ist und somit eine maßliche Veränderung nach innen besteht wird an der nicht aufliegenden Stelle durch Druckluft ausgeglichen. Eventuell ist auch eine Steuerung durch den Forminnendruck möglich.

Mit anderen Worten, es kann der gleiche Kern 10 verwendet werden, auch wenn die Acrylrohlinge fertigungsbedingt maßliche Toleranzen aufweisen. Wenn die Acrylwanne kleiner ist als es dem Normwert entspricht, kann der Kern durch Anlegen von Vakuum und Zusammenziehen der Polyurethanschaumschicht 11 verkleinert werden. Wenn die Wanne größer ist als vorgesehen, kann man den Kern quasi durch Aufblasen der Polyurethanschaumschicht durch das Anlegen von Druckluft vergrößern. Aus diesem Grunde ist ein eigenes Vakuum- und Druckluftsystem für den Aluminiumkern 10 vorgesehen, das die Vakuumbohrungen 12 im Kern 10 umfaßt. Das Vakuum- und Druckluftsystem für die Vakuumdichtkammer 22 und den Grundrahmen 21 ist davon unabhängig betätigbar.

Nachfolgend wird Bezug genommen auf Fig. 3. Die Darstellung zeigt den Adapter 23 für den Anschluß eines ( nicht dargestellten ) Injektionskopfs an das Ablaufloch 18 einer Wanne. Wie man sieht hat der äußere Stahlrohling 15 im Bereich des Ablauflochs 18 eine gewöhnliche Form, während der Acrylrohling 13 im Bereich des Ablauflochs einen eingeformten Kegel 25 aufweist. Dadurch wird erreicht, daß das aus der Injektionsöffnung der Maschine strömende Füllstoffmaterial auf die Spitze dieses Kegels 25 auftrifft und von dort aus ringsum gleichmäßig in alle Richtungen strömt und sich besser in dem Zwischenraum 26 zwischen Acrylrohling 13 und Stahlwanne 15 verteilt. Das Füllstoffmaterial strömt dabei wie man sieht durch den Kanal 23a des Adapters, an dessen Austrittsöffnung die Spitze des Kegels 25 relativ dicht herangeführt ist. Die Spitze des Kegels 25 erstreckt sich in die Ablauföffnung 18 des Stahlrohlings 15 hinein. Der Adapter hat in diesem Bereich eine kugelschalenförmige Vertiefung 23b. Oberhalb des Kanals 23a hat der Adapter 23 eine querschnittsweitere Bohrung 23c als Aufnahme für den Injektionskopf der Maschine.

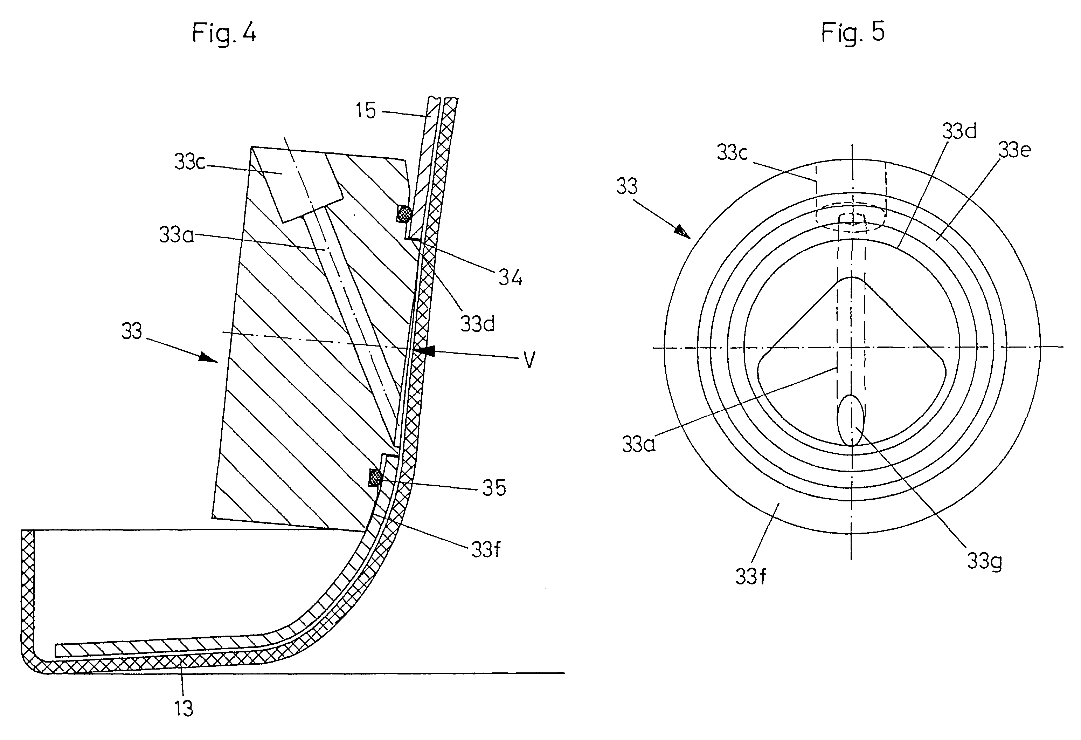

Fig. 4 beschreibt eine weitere Variante der Erfindung, bei der ein Adapter 33 verwendet wird, mittels dessen der Injektionskopf ( nicht dargestellt ) einer Zweikomponenten-Flüssigkunststoff-Hochdruckmaschine an das Überlaufloch einer erfindungsgemäßen Verbundbadewanne anschließbar ist. Der Adapter 33 hat wiederum eine querschnittsweitere Bohrung 33c, die an ihrem unteren Ende in einen Kanal 33a mündet, durch den das Füllstoffmaterial eingespritzt wird. Bei dieser Variante erstreckt sich aber der Kanal 33a und die Bohrung 33c nicht mittig, sondern exzentrisch durch den Adapter 33 und verläuft somit schräg durch diesen. Wannenseitig weist der Adapter 33 einen Absatz 33d auf, der von der Überlaufbohrung 34 der äußeren Stahlwanne 15 aufgenommen wird, wie man aus Fig. 4 erkennt.

Die Form des Adapters 33 wird auch aus der rückwärtigen Ansicht gemäß Fig. 5 deutlich. Man erkennt dort den Absatz 33d und konzentrisch zu diesem eine Nut 33e, die geeignet ist, einen Dichtungsring 35 aufzunehmen, der in Fig. 4 dargestellt ist.

Man erkennt aus Fig. 5 und Fig. 4 weiter, daß der Adapter 33 wannenseitig außen umlaufend einen abgeschrägten Bereich 33f aufweist, der eine bessere Anlage an die Wanne im Radiusbereich ermöglicht. Aus Fig. 5 ist auch'die exzentrische Austrittsbohrung 33g des Einspritzkanals 33a erkennbar.

## Patentansprüche

1. Verfahren zur Herstellung einer Verbund-Wanne, die aus einer Kunststoffinnenschale, einer Außenschale und einer Zwischenschicht aus einen Füllstoff besteht, wobei
- die vorgeformte Außenschale über die geformte Kunststoffinnenschale gestülpt wird,
- als Füllstoff ein Zweikomponenten-Flüssigkunststoff verwendet wird, dessen Komponenten gemischt und danach unter Druck durch eine Ablauföffnung oder eine Überlauföffnung in der Außenschale in den Zwischenraum zwischen den Schalen injiziert werden, und
- der Zwischenraum durch eine in die Außenschale eingebrachte Entlüftungsöffnung, welche weit von der Injektionsstelle an einem gegenüber dieser höherliegenden Punkt angeordnet ist, entlüftet wird,
**dadurch gekennzeichnet, dass**
als Außenschale eine Stahlwanne (15), als Kunststoffinnenschale ein tiefgezogener Acrylrohling (13) und als Füllstoff (24) ein kompaktes Polyurethan im Wesentlichen ohne Gaseinschlüsse oder ein Polymethylmethacrylat verwendet werden und dass die Komponenten des Füllstoffes (24) in einem druckfest an die Öffnung der Außenschale angeschlossenen Injektionskopf einer Zweikomponenten-Flüssigkunststoff-Hochdruckmaschine bei einem Druck zwischen 60 bar und 200 bar gemischt werden.

2. Verfahren nach Anspruch 1, **dadurch gekennzeichnet, dass** die Komponenten des Füllstoffes (24) durch eine Strömungsführung im Gegenstrom gemischt werden.

3. Verfahren nach Anspruch 1 oder 2, **dadurch gekennzeichnet, dass** die Komponenten des Füllstoffes (24) bei einem Druck von 90 bar bis 150 bar gemischt werden.

4. Verfahren nach einem der Ansprüche 1 bis 3, **dadurch gekennzeichnet, dass** die Komponenten des Füllstoffes (24) bei einem Druck von etwa 120 bar gemischt werden.

5. Verfahren nach einem der Ansprüche 1 bis 4, **dadurch gekennzeichnet, dass** der für die Füllstoffmenge notwendige Materialeinsatz gesteuert wird, indem man nach einem empirisch festgelegten Zeitraum nach dem Zeitpunkt, zu dem der Füllstoff (24) aus der Entlüftungsöffnung in der Außenschale (15) austritt, die Materialzufuhr abstellt.

6. Verfahren nach einem der Ansprüche 1 bis 5, **dadurch gekennzeichnet, dass** man den Füllstoff (24) auf einen im Bereich der Abflussöffnung (18) eingeformten Kegel (25) spritzt, wobei der Füllstoff von dort aus ringförmig in den Zwischenraum (26) zwischen den Schalen (13, 15) fließt.

7. Verfahren nach einem der Ansprüche 1 bis 6, **dadurch gekennzeichnet, dass** in dem Zwischenraum (26) zwischen den Schalen (13, 15) Hindernisse angeordnet werden, die den einströmenden Füllstoff (24) in einen bestimmten Bereich des Zwischenraumes lenken und den Füllstoff (24) erst nach Füllung dieses Bereiches in andere Bereiche des Zwischenraumes fließen lassen.

8. Verfahren nach einem der Ansprüche 1 bis 7, **dadurch gekennzeichnet, dass** zur Fixierung des Acrylrohlings (13) eine an die Form des Acrylrohlings angepasste Form (10) verwendet wird, die allseitig etwas kleiner ist als der Acrylrohling (13), zahlreiche Bohrungen (12) aufweist und an deren Oberfläche Stücke oder Streifen aus einem Kunststoffschaum (11) mit einigen Millimetern Schichtdicke aufgeklebt sind, und dass über die Bohrungen (12) wahlweise entweder Unterdruck an die Schaumstoffschicht (11) angelegt wird oder die Schaumstoffschicht (11) mit Druckluft beaufschlagt wird, um Maßabweichungen des Acrylrohlings (13) auszugleichen.

9. Verfahren nach einem der Ansprüche 1 bis 8, **dadurch gekennzeichnet, dass** der Injektionskopf an die Ablauföffnung (18) der Außenschale (15) mit einem Adapter (23) angeschlossen wird, der eine Aufnahmebohrung (23c) für den Injektionskopf und einen von dieser Bohrung (23c) ausgehenden sowie mittig in einer muldenförmigen Ausnehmung (23b) des Adapters (23) mündenden Kanal (23a) aufweist, und dass der Acrylrohling (13) eine kegelförmige Einformung (25) aufweist, die durch die Ablauföffnung (18) der Außenschale (15) hindurchragt und sich bis nahe an die Öffnung (23a) des Kanals erstreckt.

10. Verfahren nach einem der Ansprüche 1 bis 8, **dadurch gekennzeichnet, dass** der Injektionskopf an die Überlauföffnung (34) der Außenschale (15) mit einem Adapter (33) angeschlossen wird, der eine Aufnahmebohrung (33c) für den Injektionskopf und einen von dieser Bohrung (33c) ausgehenden, sich schräg durch den Adapter (33) erstreckenden Kanal (33a) aufweist, wobei die wannenseitige Einspritzöffnung exzentrisch zur Achse (V) des Adapters (33) angeordnet ist.

## Claims

1. A process for producing a composite tub which consists of a plastics inner shell, an outer shell and an intermediate layer of a filling material, wherein
- the preformed outer shell is placed over the moulded plastics inner shell,
- a two-component liquid plastics material is used as a filling material, the components of which are mixed and are thereafter injected under pressure through a drainage opening or an overflow opening in the outer shell into the cavity between the shells, and
- the cavity is deaerated through a deaeration opening which is provided in the outer shell and which is disposed far from the injection point at a point which is higher than the latter,
**characterised in that**
a steel tub (15) is used as the outer shell, a thermoformed acrylic blank (13) is used as the plastics inner shell, and a dense polyurethane which is substantially free from gas inclusions, or a polymethyl methacrylate, is used as the filling material (24), and that the components of the filling material (24) are mixed at a pressure between 60 bar and 200 bar in an injection head of a two-component liquid plastics high-pressure injection machine, which injection head is connected in a pressure-tight manner to the opening in the outer shell.

2. A process according to claim 1, **characterised in that** the components of the filling material (24) are mixed in counter-current flow by a flow guidance system.

3. A process according to claims 1 or 2, **characterised in that** the components of the filling material (24) are mixed at a pressure of 90 bar to 150 bar.

4. A process according to any one of claims 1 to 3, **characterised in that** the components of the filling material (24) are mixed at a pressure of about 120 bar.

5. A process according to any one of claims 1 to 4, **characterised in that** the usage of material which is necessary for the amount of filling material is controlled by shutting off the supply of material after an empirically determined period following the time at which the filling material (24) emerges from the deaeration opening in the outer shell (15).

6. A process according to any one of claims 1 to 5, **characterised in that** the filling material (24) is injected on to a cone (25) which is integrally formed in the region of the drainage opening (18), whereupon the filling material flows from there in the form of a ring into the cavity (26) between the shells (13, 15).

7. A process according to any one of claims 1 to 6, **characterised in that** obstacles are disposed in the cavity (26) between the shells (13, 15), which obstacles direct the inflowing filling material (24) into a defined region of the cavity and only allow the filling material (24) to flow into other regions of the cavity after the aforementioned region has been filled.

8. A process according to any one of claims 1 to 7, **characterised in that** a mould (10) is used in order to fix the acrylic blank (13), which mould is matched to the shape of the acrylic blank and is somewhat smaller all round than the acrylic blank (13), which mould has numerous bores (12) and to the surface of which pieces or strips of a plastics foam (11) with a layer thickness of a few millimetres are adhesively bonded, and that, via the bores (12), either a vacuum is applied to the layer of foamed material (11) or the layer of foamed material (11) is acted upon by compressed air in order to offset dimensional tolerances in the acrylic blank (13).

9. A process according to any one of claims 1 to 8, **characterised in that** the injection head is connected to the drainage opening (18) in the outer shell (15) by an adaptor (23) which comprises a receiver bore (23c) for the injection head and a channel (23a) which leads from said bore (23c) and which leads centrally into a trough-shaped indentation (23b) in the adaptor (23), and that the acrylic blank (13) has a conical formation (25) which protrudes through the drainage opening (18) in the outer shell (15) and extends close to the opening (23a) in the channel.

10. A process according to any one of claims 1 to 8, **characterised in that** the injection head is connected to the overflow opening (34) in the outer shell (15) by an adaptor (33) which comprises a receiver bore (33c) for the injection head and a channel (33a) which leads from said bore (33c) and which extends obliquely through the adaptor (33), wherein the injection opening on the tub side is disposed eccentrically in relation to the axis (V) of the adaptor (33).

## Revendications

1. Procédé de fabrication d'une baignoire composite qui est constituée d'une coque intérieure en matière plastique, d'une coque extérieure et d'une couche intermédiaire en une matière de remplissage, dans lequel
- la coque extérieure préformée est emboîtée sur la coque intérieure en matière plastique moulée,
- comme matière de remplissage on utilise une matière synthétique liquide à deux composants dont les composants sont mélangés puis sont injectés sous pression dans l'interstice entre les coques, à travers une ouverture d'évacuation ou une ouverture de trop-plein ménagée dans la coque extérieure, et
- l'interstice est mis à l'atmosphère à travers une ouverture d'évacuation d'air pratiquée dans la coque extérieure et qui est disposée loin de l'emplacement d'injection, en un point situé plus haut que celui-ci,
**caractérisé en ce que**
on utilise comme coque extérieure une baignoire en acier (15), comme coque intérieure en matière plastique une ébauche acrylique (13) emboutie et comme matière de remplissage (24) un polyuréthanne compact sensiblement sans inclusions de gaz ou un polyméthacrylate de méthyle, et **en ce que** les composants de la matière de remplissage (24) sont mélangés dans une tête d'injection raccordée, de manière à résister à la pression, à l'ouverture de la coque extérieure, d'une machine sous haute pression pour matière synthétique liquide à deux composants, sous une pression comprise entre 60 bars et 200 bars.

2. Procédé selon la revendication 1, **caractérisé en ce que** les composants de la matière de remplissage (24) sont mélangés à contre-courant par un guidage du courant.

3. Procédé selon la revendication 1 ou 2, **caractérisé en ce que** les composants de la matière de remplissage (24) sont mélangés sous une pression de 90 bars à 150 bars.

4. Procédé selon l'une des revendications 1 à 3, **caractérisé en ce que** les composants de la matière de remplissage (24) sont mélangés sous une pression d'environ 120 bars.

5. Procédé selon l'une des revendications 1 à 4, **caractérisé en ce que** l'utilisation de matière, nécessaire à la quantité de matière de remplissage, est commandée par arrêt de l'arrivée de matière après un intervalle de temps fixé de manière empirique à partir de l'instant auquel la matière de remplissage (24) sort de l'ouverture de purge d'air de la coque extérieure (15).

6. Procédé selon l'une des revendications 1 à 5, **caractérisé en ce qu'**on injecte la matière de remplissage (24) sur un cône (25) formé à l'intérieur de la zone de l'ouverture d'écoulement (18), la matière de remplissage s'écoulant à partir de là en anneau dans l'interstice (26) entre les coques (13, 15).

7. Procédé selon l'une des revendications 1 à 6, **caractérisé en ce que** dans l'interstice (26) entre les coques (13, 15) sont disposés des obstacles qui dirigent la matière de remplissage (24) arrivant dans une zone déterminée de l'interstice et qui font circuler la matière de remplissage (24), après remplissage de cette zone seulement, dans d'autres zones de l'interstice.

8. Procédé selon l'une des revendications 1 à 7, **caractérisé en ce que** pour fixer l'ébauche acrylique (13) on utilise un moule (10) adapté au moule de l'ébauche acrylique, qui est de tous côtés un peu plus petit que l'ébauche acrylique (13), qui présente de nombreux perçages (12) et à la surface duquel sont collés des morceaux ou des bandes de mousse plastique (11) de quelques millimètres d'épaisseur de couche, et **en ce qu'**à travers les perçages (22), soit on applique une dépression à la couche de mousse (11), soit la couche de mousse (11) est soumise à de l'air comprimé, afin de compenser des écarts de cote de l'ébauche acrylique (13).

9. Procédé selon l'une des revendications 1 à 8, **caractérisé en ce que** la tête d'injection est raccordée à l'ouverture d'écoulement (18) de la coque extérieure (15) par un adaptateur (23) qui présente un trou de réception (23c) pour la tête d'injection, et un canal (23a), partant de ce perçage (23c) et débouchant au centre dans un évidement (23b) en forme d'auge de l'adaptateur (23), et **en ce que** l'ébauche acrylique (13) présente un creux (25) de forme conique qui traverse l'ouverture d'écoulement (18) de la coque extérieure (15) et s'étend jusqu'à proximité de l'ouverture (23a) du canal.

10. Procédé selon l'une des revendications 1 à 8, **caractérisé en ce que** la tête d'injection est raccordée à l'ouverture de trop-plein (34) de la coque extérieure (15), par un adaptateur (33) qui présente un trou de réception (33c) pour la tête d'injection et un canal (33a) partant de ce perçage (33c) et s'étendant obliquement à travers l'adaptateur (33), l'ouverture d'injection côté baignoire étant disposée excentrée par rapport à l'axe (V) de l'adaptateur (33).
